Europäisches Patentamt

(19) European Patent Office (11) Publication number: **0 100 919**
**B1**
Office européen des brevets

(12) **EUROPEAN PATENT SPECIFICATION**

(45) Date of publication of patent specification: **21.01.87** (51) Int. Cl.⁴: **B 23 K 35/30**, B 23 K 35/14

(21) Application number: **83106996.8**

(22) Date of filing: **16.07.83**

(54) **Low temperature, high strength nickel based brazing alloys.**

(30) Priority: **11.08.82 US 407187**

(43) Date of publication of application:
**22.02.84 Bulletin 84/08**

(45) Publication of the grant of the patent:
**21.01.87 Bulletin 87/04**

(84) Designated Contracting States:
**DE FR GB IT NL**

(56) References cited:
**EP-A-0 056 141**
**GB-A- 886 591**
**US-A-3 853 548**
**US-A-3 856 513**
**US-A-4 149 881**

**WELDING JOURNAL, vol. 59, no. 10, October
1979, pages 283-s-286-s, Miami, FL., US T.L.
D'SILVA: "Nickel-palladium base brazing filler
metal"**

(73) Proprietor: **ALLIED CORPORATION
Columbia Road and Park Avenue P.O. Box 2245R
(Law Dept.)
Morristown New Jersey 07960 (US)**

(72) Inventor: **Datta, Amitava
5 Pembroke Place
Morris Township New Jersey 07960 (US)**
Inventor: **Bose, Debasis
312 Quaker Church Road
Randolph New Jersey 07869 (US)**
Inventor: **DeCristofaro, Nicholas John
114 Hillside Avenue
Chatham New Jersey 07928 (US)**

(74) Representative: **Weber, Dieter, Dr. et al
Dr. Dieter Weber und Klaus Seiffert
Patentanwälte Gustav-Freytag-Strasse 25
Postfach 6145
D-6200 Wiesbaden 1 (DE)**

(56) References cited:
**WELDING JOURNAL, vol. 60, no. 10, October
1981, pages 29-34, Miami, FL., US D. BOSE et
al.: "Comparison of gold-nickel with nickel
base metallic glass brazing foils"**

Courier Press, Leamington Spa, England.

# 0 100 919

## Description

### Background of the invention
#### 1. Field of the invention

This invention relates to brazing alloys and, in particular, to a homogeneous, ductile brazing material useful in brazing stainless steels and superalloys.

#### 2. Description of the prior art

Brazing is a process for joining metal parts, often of dissimilar composition, to each other. Typically, a filler metal that has a melting point lower than that of the base metal parts to be joined together is interposed between the metal parts to form an assembly. The assembly is then heated to a temperature sufficient to melt the filler metal. Upon cooling, a strong, corrosion resistant, leak-tight joint is formed.

Quite often the brazed assemblies are heat treated (or soluton treated) after brazing. Alternatively, heat treatment or solution treatment of the base metal and brazing can be performed simultaneously. Heat treatment (or solution treatment) is a procedure that comprises heating the metal part to a preselected temperature followed by cooling at a preselected rate to achieve desired mechanical properties of the base metal. Solution treatment, frequently applied to strengthen superalloys, consists of several heating and cooling cycles. Some $\gamma'[Ni_3(Al,Ti)]$ superalloys (e.g., Inconel 718) require solution treatment below 1010°C(1850°F) to prevent excessive grain growth and dissolution of $\gamma$, resulting in reduced mechanical properties.

The most widely used brazing filler metal for joining superalloys such as Inconel 718 is a gold-nickel alloy consisting of 57.6 atom percent gold and 42.4 atom percent Ni. Brazing temperatures employed for this gold-nickel filler metal are in the vicinity of 996°C (1825°F), and joints formed using such filler metal provide good strength and corrosion resistance at elevated temperatures. The main drawback of this filler metal is its precious metal content, and hence its high price. For this reason, fabricators using $\gamma'$ superalloys have long been on the look out for less expensive substitutes. Certain of the brazing alloys designed in the AWS BNi family provide mechanical and metallurgical properties that are comparable to those of gold-nickel filler metal. However, the brazing temperatures of these BNi alloys are greater than 1010°C (1850°F). As a result, such BNi alloys are not suitable for joining $\gamma'$ superalloys.

Ductile glassy metal alloys have been disclosed in US—A—3,856,513.

These alloys include compositions having the formula $M_a Y_b Z_c$, where M is a metal selected from the group consisting of iron, nickel, cobalt, vanadium and chromium, Y is an element selected from the group consisting of phosphorus, boron and carbon, and Z is an element selected from the group consisting of aluminum, silicon, tin, germanium, indium, antimony and beryllium, "a" ranges from about 60 to 90 atom percent, "b" ranges from about 10 to 30 atom percent and "c" ranges from about 0.1 to 15 atom percent. Also disclosed are glassy wires having the formula $T_i X_j$, where T is a transition metal or mixture thereof and X is an element selected from the group consisting of aluminum, antimony, beryllium, boron, germanium, carbon, indium, phosphorus, silicon and tin and mixtures thereof and where the proportion in atomic percentages by i and j are respectively from about 70 to about 87 and from about 13 to about 30, with the proviso that i plus j equals 100. The transition metals T are those of Group IB IIIB, IVB, VB, VIB, VIIB and VIII of the Periodic Chart of the Elements and include the following: scandium, yttrium, lanthanum, actinium, titanium, zirconium, hafnium, vanadium, niobium, tantalum, chromium, molybdenum, rhenium, osmium, cobalt, rhodium, iridium, nickel, palladium, platinum, copper, silver, and gold; preferably Fe, Ni, Co, V, Cr, Pd, Pt and Ti.

The US—A—4,149,881 describes brazing alloys consisting of from about 17 to 44 percent by weight of palladium, from about 4 to about 11 percent by weight of chromium, from about 1 to about 4 percent by weight of silicon, from about 1.5 to about 4 percent by weight of boron and the balance nickel. They do not contain copper or iron, and they have to contain silicon.

There remains a need in the art for an inexpensive brazing alloy in homogeneous foil or powder form, the mechanical and metallurgical properties of which would be comparable to those of the aforesaid $Au_{57.6}Ni_{42.4}$ alloy.

### Summary of the invention

The present invention provides a brazing alloy which is suitable for joining $\gamma'$ superalloys at temperatures ranging from about 1700—1850°F (926—1010°C) but which is much less expensive than alloys such as $Au_{57.6}Ni_{42.4}$ previously used. The alloy consists of 10 to 30 atom percent Pd, 5 to 20 atom percent Cr, 1 to 5 atom percent of at least one metal selected from the group consisting of Cu and Fe, 15 to 20 atom percent B and the balance nickel and incidental impurities, the composition being such that the total of nickel, palladium, chromium, copper and iron ranges from 80 to 85 atom percent.

Since the brazing temperature of these filler metals ranges from about 926—1010°C (1700—1850°F), the alloys of this invention are especially suited for brazing $\gamma'$ superalloys. The mechanical and metallurgical properties of brazements made with these alloys are comparable to those of brazing filler metal composed of $Au_{57.6}Ni_{42.4}$. Since the alloys of the present invention contain substantial amounts of boron (15 to 20 atom percent) and which is present in the solid state as hard and brittle borides, the preferred method for fabrication of these alloys into a flexible thin foil form is that of rapid solidification on a moving chill

2

surface. Foil produced in this manner is composed of metastable material having at least 50% glassy structure with a thickness of less than 76 μm (0.003″). Other methods, such as (1) rolling (2) casting or (3) powder metallurgical techniques can be applied to fabricate these alloys to a foil form. It has been found that use of a thin flexible and homogeneous foil, is beneficial for joining wide areas with narrow clearances. The alloys of the invention can also be produced in powder form by atomization of the alloy or mechanical comminution of a foil composed thereof.

Brief description of the drawings

The invention will be more fully understood and further advantages will become apparent when reference is made to the following detailed description of the preferred embodiment of the invention and the accompanying drawing, which is a combined plan and elevation of a machined tensile test specimen brazed with the alloys of the present invention.

Detailed description of the invention

In any brazing process, the brazing material must have a melting point that will be sufficiently high to provide strength to meet service requirements of the metal parts brazed together. However, the melting point must not be so high as to make difficult the brazing operation. Further, the filler material must be compatible, both chemically and metallurgically, with the materials being brazed. The brazing material must be more noble than the metal being brazed to avoid corrosion. Ideally, the brazing material must be in ductile foil form so that complex shapes may be stamped therefrom. Finally, the brazing foil should be homogeneous, that is, contain no binders or other materials that would otherwise form voids or contaminating residues during brazing.

In accordance with the invention, a homogeneous ductile brazing material in foil form is provided. The brazing foil is less than 76 μm (.003″) thick, preferably about 38 μm (.0015″) to 63.5 μm (.0025″) thick and most preferably about 12.7 μm (.0005″) to 38 μm (.0015″) thick. Preferably, the brazing foil has a composition consisting of 10 to 30 atom percent Pd, 5 to 20 atom percent Cr, 1 to 5 atom percent of at least one metal selected from the group consisting of Cu and Fe, 15 to 20 atom percent B and the balance nickel and incidental impurities. The composition is such that the total of nickel, palladium, chromium, copper and iron ranges from 80 to 85 atom percent. These compositions are compatible with all stainless steels, as well as nickel and cobalt based alloys.

By homogeneous is meant that the foil, as produced, is of substantially uniform composition in all dimensions. By ductile is meant that the foil can be bent to a round radius as small as ten times the foil thickness without fracture.

Examples of brazing alloy compositions within the scope of the invention are set forth in Table I below:

# 0 100 919

TABLE I

| Example No. | Ni | Cu | Fe | Cr | Pd | B | Si |
|---|---|---|---|---|---|---|---|
| 1 (wt%) | 51.44 | 2.10 | — | 8.60 | 35.18 | 2.68 | — |
| (at%) | 53 | 2 | — | 10 | 20 | 15 | — |
| 2 (wt%) | 48.41 | 5.24 | — | 8.58 | 35.09 | 2.67 | — |
| (at%) | 50 | 5 | — | 10 | 20 | 15 | — |
| 3 (wt%) | 52.52 | — | 0.93 | 8.61 | 35.25 | 2.69 | — |
| (at%) | 54 | — | 1 | 10 | 20 | 15 | — |
| 4 (wt%) | 48.72 | — | 4.63 | 8.63 | 35.32 | 2.69 | — |
| (at%) | 50 | — | 5 | 10 | 20 | 15 | — |
| 5 (wt%) | 45.36 | 5.46 | — | 8.93 | 36.54 | 3.71 | — |
| (at%) | 45 | 5 | — | 10 | 20 | 20 | — |

Comparative Example No.

| Example No. | Ni | Cu | Fe | Cr | Pd | B | Si |
|---|---|---|---|---|---|---|---|
| 6 (wt%) | 58.87 | — | 0.95 | 8.84 | 27.12 | 1.84 | 2.39 |
| (at%) | 59 | — | 1 | 10 | 15 | 10 | 5 |
| 7 (wt%) | 58.94 | 2.20 | — | 4.50 | 27.63 | 1.87 | 4.86 |
| (at%) | 58 | 2 | — | 5 | 15 | 10 | 10 |
| 8 (wt%) | 60.09 | — | 0.97 | 4.51 | 27.69 | 1.88 | 4.87 |
| (at%) | 59 | — | 1 | 5 | 15 | 10 | 10 |
| 9 (wt%) | 67.99 | — | 1.01 | 4.70 | 19.25 | 1.96 | 5.08 |
| (at%) | 64 | — | 1 | 5 | 10 | 10 | 10 |
| 10 (wt%) | 50.72 | 2.07 | — | 8.47 | 34.68 | 1.76 | 2.28 |
| (at%) | 53 | 2 | — | 10 | 20 | 10 | 5 |
| 11 (wt%) | 52.55 | — | 4.54 | 4.23 | 34.63 | 1.76 | 2.29 |
| (at%) | 55 | — | 5 | 5 | 20 | 10 | 5 |
| 12 (wt%) | 26.87 | — | — | 15.86 | 48.70 | — | 8.57 |
| (at%) | 30 | — | — | 20 | 30 | — | 20 |
| 13 (wt%) | 60.01 | 1.10 | — | 4.50 | 27.65 | 1.87 | 4.86 |
| (at%) | 59 | 1 | — | 5 | 15 | 10 | 10 |

The brazing temperature of the brazing alloys of the invention ranges from about 927 to 1010°C (1700 to 1850°F). The temperature of brazing is thus in the solution treatment range of γ' superalloys. This will also enable fabricators to braze and heat treat γ' superalloys simultaneously.

The brazing foils of the invention are prepared by cooling a melt of the desired composition at a rate of at least about $10^5$°C/sec, employing metal alloy quenching techniques well-known to the glassy metal alloy art; see, e.g., US—A—3,856,513 and US—A—4,148,973, discussed earlier. The purity of all compositions is that found in normal commercial practice.

A variety of techniques are available for fabricating continuous ribbon, wire, sheet, etc. Typically, a particular composition is selected, powders or granules of the requisite elements in the desired portions are melted and homogenized, and the molten alloy is rapidly quenched on a chill surface, such as rapidly rotating metal cylinder.

Under these quenching conditions, a metastable, homogeneous, ductile material is obtained. The metastable material may be glassy, in which case there is no long range order. X-ray diffraction patterns of glassy metal alloys show only a diffuse halo, similar to that observed for inorganic oxide glasses. Such glassy alloys must be at least 50% glassy to be sufficiently ductile to permit subsequent handling, such as stamping complex shapes from ribbons of the alloys. Preferably, the glassy metal alloys must be at least 80% glassy, and most preferably substantially (or totally) glassy, to attain superior ductility.

The metastable phase may also be a solid solution of the constituent elements. In the case of the alloys of the invention, such metastable, solid solution phases are not ordinarily produced under conventional processing techniques employed in the art of fabricating crystalline alloys. X-ray diffraction patterns of the solid solution alloys show the sharp diffraction peaks characteristic of crystalline alloys, with some

4

broadening of the peaks due to desired fine-grained size of crystallites. Such metastable materials are also ductile when produced under the conditions described above.

The brazing material of the invention is advantageously produced in foil (or ribbon) form, and may be used in brazing applications as cast, whether the material is glassy or a solid solution. Alternatively, foils of glassy metal alloys may be heat treated to obtain a crystalline phase, preferably fine-grained, in order to promote longer die life when stamping of complex shapes is contemplated.

Foils as produced by the processing described above typically are above 13 µm (0.0005) to 76 µm (0.003) inch thick, which is also the desired spacing between bodies being brazed. Foil thickness, and hence spacing of about 13 µm (.0005) to 36 µm (.0014) inch maximizes the strength of the braze joint. Thinner foils stacked to form a thickness of greater than 0.0025 inch may also be employed. Further, no fluxes are required during brazing, and no binders are present in the foil. Thus, formation of voids and contaminating residues is eliminated. Consequently, the ductile brazing ribbons of the invention provide both ease of brazing, by eliminating the need for spacers, and minimal post-brazing treatment.

Example 1

Ribbons of about 2.54 to 25.4 mm (about 0.10 to 1.00 inch) wide and about 13 to 76 µm (about 0.0005 to 0.003 inch) thick were formed by squirting a melt of the particular composition by overpressure of argon onto a rapidly rotating copper chill wheel (surface speed about 15.24 to 30.48 m/sec—3000 to 6000 ft/min). Metastable homogeneous ribbons of substantially glassy alloys having the compositions set forth in Table I were produced.

Example 2

The liquidus and solidus temperatures of the ribbons mentioned in Example 1 were determined by Differential Thermal Analysis (DTA) Technique. The individual samples were heated side by side with an inert reference material at a uniform rate and the temperature difference between them was measured as a function of temperature. The resulting curve, known as a thermogram, was a plot of heat-energy change vs. temperature, from which the beginning of melting and end of melting, known respectively as solidus and liquidus temperatures, was determined. Values thus determined are set forth in Table II below.

TABLE II

| | | Composition (at%) | Liquidus °C (°F) | Solidus °C (°F) |
|---|---|---|---|---|
| | 1 | $Ni_{53}Cu_2Cr_{10}Pd_{20}B_{15}$ | 988 (1810) | 928 (1702) |
| | 2 | $Ni_{50}Cu_5Cr_{10}Pd_{20}B_{15}$ | 992 (1818) | 932 (1710) |
| | 3 | $Ni_{54}Fe_1Cr_{10}Pd_{20}B_{15}$ | 987 (1809) | 920 (1688) |
| | 4 | $Ni_{50}Fe_5Cr_{10}Pd_{20}B_{15}$ | 992 (1818) | 932 (1710) |
| Comparative Example No. | | | | |
| | 6 | $Ni_{59}Fe_1Cr_{10}Pd_{15}B_{10}Si_5$ | 988 (1810) | 820 (1508) |
| | 7 | $Ni_{58}Cu_2Cr_5Pd_{15}B_{10}Si_{10}$ | 975 (1787) | 819 (1506) |
| | 8 | $Ni_{59}Fe_1Cr_5Pd_{15}B_{10}Si_{10}$ | 968 (1774) | 838 (1540) |
| | 9 | $Ni_{64}Fe_1Cr_5Pd_{10}B_{10}Si_{10}$ | 980 (1796) | 848 (1558) |
| | 10 | $Ni_{53}Cu_2Cr_{10}Pd_{20}B_{10}Si_5$ | 998 (1828) | 783 (1441) |
| | 11 | $Ni_{55}Fe_5Cr_5Pd_{20}B_{10}Si_5$ | 960 (1760) | 810 (1490) |

Example 3

Tensile test specimens of dimensions 2.54 cm×15.24 cm×0.158 cm thick (1″×6″×0.0625″) were cut from Inconel 718 superalloy. The brazing alloys of the invention, glassy ductile ribbons of nominal chemical compositions of Samples 1, 3, 4 and 6 as in Table I having dimensions of about 38 µm (0.0015″) thick by 6.35—12.7 mm (0.25—0.5″) wide, were used to braze test specimens. Braze joints were of the lap type, with lap dimension carefully controlled to 3.175 mm (0.125″) and 6.35 mm (0.25″). Brazing specimens were degreased in acetone and rinsed with alcohol. Lap joints containing brazing ribbons of the invention were assembled by laying ribbons side by side to cover the entire length of the lap joint. In the case of these brazing alloys, ribbons acted as joint spacers. Specimens were then tack welded by gas tungsten arc welding to hold the assembly together.

0 100 919

For comparative purposes, samples were made in an identical manner to that described above using 38 μm (0.0015") thick×2.54 cm (1") wide $Au_{57.6}Ni_{42.4}$ foil.

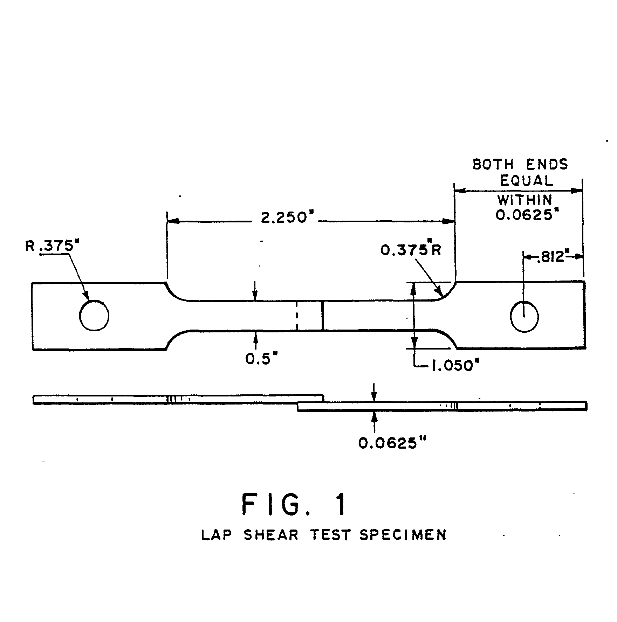

Brazing was done in a vacuum furnace at a vacuum of about $10^{-4}$ torr for about 5 minutes. Brazing temperatures of the alloys of the invention were about 25°C (50°F) higher than the liquidus temperature of each alloy as given in Table II. Each of the $Au_{57.6}Ni_{42.4}$ samples was brazed at 996°C (1825°F). After brazing, the specimens were machined to the dimensions as shown in Figure 1.

Machined specimens were then solution treated in the following way to achieve optimum strength of the base metal: 980°C (1800°F)/1 hr/air cool+720°C (1325°F)/8 hr/furnace cool and 620°C (1150°F)/8 hr/air cool to a base metal hardness of Rc 38—41.

Tensile tests were conducted at 538°C±5°C (1000°F±10°F) since superalloys such as Inconel 718 are usually in service at elevated temperatures. The test results are reported in Table III.

At an overlap of 0.635 cm (0.25"), all the brazed samples made with the alloys of the invention failed in the base metal, indicating that the strength of the brazed joint was greater than that of the base metal. In other words, the base metal failed before the brazed joint. By way of contrast, each of the $Au_{57.6}Ni_{42.4}$ brazements failed in the brazed joint. This data indicates that joints constructed with an overlap of 0.635 cm (0.25") and then brazed with the alloys of invention were stronger than joints having the aforesaid construction that were brazed with alloy compound of $Au_{57.6}Ni_{42.4}$. When the area of overlap was reduced to 0.3175 cm (0.125"), brazements made with samples 1 and 3 of the alloys of the invention as well as the samples made with the $Au_{57.6}Ni_{42.4}$ alloy failed in the brazed joint. As shown in Table III, the joint strengths of samples 1 and 3 of the alloys of the invention were comparable to the $Au_{57.6}Ni_{42.4}$ sample. At the same overlap of 0.3175 cm (0.125"), sample 4 of the alloy of invention failed in the base metal, showing a much stronger joint compared to the $Au_{57.6}Ni_{42.4}$ brazed sample, which failed in the brazed joint.

TABLE III

| Sample No. | Composition (at%) | Overlap cm(inches) | Shear stress MPa (psi) | Tensile stress MPa (psi) | Area of failure |
|---|---|---|---|---|---|
| 1 | $Ni_{53}Cu_2Cr_{10}Pd_{20}B_{15}$ | 0.3175 (0.125) | 330 (47,920) | 660 (95.840) | Joint |
| | | 0.635 (0.25) | 240 (34,720) | 957 (138,880) | Base metal |
| 3 | $Ni_{54}Fe_1Cr_{10}Pd_{20}B_{15}$ | 0.3175 (0.125) | 354 (51,280) | 700 (102,600) | Joint |
| | | 0.635 (0.25) | 249 (36,160) | 997 (144,640) | Base metal |
| 4 | $Ni_{50}Fe_5Cr_{10}Pd_{20}B_{15}$ | 0.3175 (0.125) | 376 (54,560) | 752 (109,120) | Base metal |
| | | 0.635 (0.25) | 240 (34,820) | 946 (137,280) | Base metal |
| | $Au_{57.6}Ni_{42.4}$ | 0.3175 (0.125) | 337 (48,813) | 687 (99,627) | Joint |
| | | 0.635 (0.25) | 222 (32,187) | 887 (128,747) | Joint |

Comparative Example 4

In order to demonstrate beneficial effects of the addition of Cu and Fe to Ni-Pd-Cr-B alloys, the following composition was cast to ductile ribbon form by the process described in Example 1:

| Sample | Ni | Cr | Pd | B |
|---|---|---|---|---|
| (at%) | 55 | 10 | 20 | 15 |

Brazements were made using Inconel 718 base metal, machined, solution treated and tested at 538+10°C (1000+10°F) in an identical way to that described in Example 3.

The strength value of this alloy is reported below in Table IV:

6

TABLE IV

| Sample No. | Composition (at%) | Overlap cm (inch) | Shear stress (MPa) (psi) | Tensile stress (MPa) (psi) | Area of failure |
|---|---|---|---|---|---|
| 1 | $Ni_{55}Cr_{10}Pd_{20}B_{15}$ | 0.3175 (0.125) | ** | ** | ** |
| | | 0.635 (0.25) | 246 (35,660) | 991 (143.760) | Base metal |

**) Separated during solution treatment.

The solution treatment of all samples was performed by hanging the specimens in the furnace, keeping one end fixed. As indicated, the above alloys with 0.3175 cm (0.125) overlap (two times the base metal thickness) were separated during solution treatment. None of the alloys in Example 3 containing Fe and Cu were separated during the treatment. This indicates that Ni-Pd-Cr-B alloys containing Cu or Fe minimizes displacement of the parts in the braze assembly during brazing or solution treatment.

Additional beneficial effects of Fe and Cu addition have been further demonstrated by determining normalized diffusion distance as given below in Table V:

TABLE V

| Composition (at%) | Normalized diffusion distance μm (inches) |
|---|---|
| $Ni_{55}Cr_{10}Pd_{20}B_{15}$ | 41 (.0016) |
| $Ni_{54}Fe_1Cr_{10}Pd_{20}B_{15}$ | 20 (.0008) |
| $Ni_{50}Fe_5Cr_{10}Pd_{20}B_{15}$ | 15 (.0006) |

Normalized diffusion distance was computed, using the equation:

$$\text{Normalized diffusion distance} = d \times \frac{d}{t}$$

where
d=diffusion zone in the base metal
t=thickness of the joint.

It is evident from Table V that Fe minimizes boron diffusion into the base metal, resulting in improved joint/base metal interface strength. It has also been found that Cu, being a noble metal, improves the corrosion resistance of Ni alloys.

**Claims**

1. A brazing alloy having a composition consisting of 10 to 30 atom percent palladium, 5 to 20 atom percent chromium, 1 to 5 atom percent of at least one metal selected from the group consisting of copper and iron, 15 to 20 atom percent boron and the balance nickel and incidental impurities, wherein the composition is such that the total of nickel, palladium, chromium, copper and iron ranges from 80 to 85 atom percent.

2. A brazing alloy as recited in Claim 1, wherein said alloy is in powder form.

3. A brazing alloy as recited in Claim 1, wherein said alloy is composed of metastable material having at least 50 percent glassy structure.

4. A brazing alloy as recited in Claim 3, wherein said alloy is in the form of homogeneous, ductile brazing foil.

5. A brazing alloy as recited in Claim 4, wherein said foil has a thickness ranging from 0.0005 to 0.003 inch, $1.27 \times 10^{-3}$—$7.62 \times 10^{-3}$ cm.

6. A brazing alloy as recited in Claim 3, which is at least 80 percent glassy.

7. A brazing alloy as recited in Claim 6, which is totally glassy.

# 0 100 919

## Patentansprüche

1. Hartlötlegierung mit einer Zusammensetzung, die aus 10 bis 30 Atom-% Palladium, 5 bis 20 Atom-% Chrom, 1 bis 5 Atom-% wenigstens eines Metalles aus der Gruppe Kupfer und Eisen, 15 bis 20 Atom-% Bor und dem Rest Nickel und unwesentlichen Verunreinigungen besteht, wobei die Zusammensetzung derart ist, daß die Gesamtheit von Nickel, Palladium, Chrom, Kupfer und Eisen im Bereich von 80 bis 85 Atom-% liegt.

2. Hartlötlegierung nach Anspruch 1, bei der die Legierung in Pulverform vorliegt.

3. Hartlötlegierung nach Anspruch 1, bei der die Legierung aus metastabilem Material mit einer zu wenigstens 50% glasartigen Struktur besteht.

4. Hartlötlegierung nach Anspruch 3, bei der die Legierung in der Form einer homogenen duktilen Hartlötfolie vorliegt.

5. Hartlötlegierung nach Anspruch 4, bei der die Folie eine Dicke im Bereich von 0,0005 bis 0,003 inch, $1,27 \times 10^{-3}$ bis $7,62 \times 10^{-3}$ cm hat.

6. Hartlötlegierung nach Anspruch 3, die zu wenigstens 80% glasartig ist.

7. Hartlötlegierung nach Anspruch 6, die insgesamt glasartig ist.

## Revendications

1. Alliage de brasage ayant une composition consistant en 10 à 30 pour-cent atomiques de palladium, 5 à 20 pour-cent atomiques de chrome, 1 à 5 pour-cent atomiques d'au moins un métal choisi dans le groupe comprenant le cuivre et le fer, 15 à 20 pour-cent atomiques de bore et le reste étant du nickel et des impuretés inévitables, dans lequel la composition est telle que le total du nickel, palladium, chrome, cuivre et fer soit compris entre 80 et 85 pour-cent atomiques.

2. Alliage de brasage suivant la revendication 1, dans lequel ledit alliage se trouve sous forme de poudre.

3. Alliage de brasage suivant la revendication 1, dans lequel ledit alliage est composé d'un matériau métastable ayant une structure vitreuse à au moins 50%.

4. Alliage de brasage suivant la revendication 3, suivant lequel ledit alliage se trouve sous la forme d'une feuille très mince de brasage, ductile et homogène.

5. Alliage de brasage suivant la revendication 4, dans lequel ladite feuille très mince a une épaisseur comprise entre 0,0005 et 0,003 pouce, soit $1,27.10^{-3}$ cm et $7,62.10^{-3}$ cm.

6. Alliage de brasage suivant la revendication 3, qui est vitreux à au moins 80%.

7. Alliage de brasage suivant la revendication 6, qui est totalement vitreux.

8

# FIG. 1

## LAP SHEAR TEST SPECIMEN